(19) Europäisches Patentamt
European Patent Office
Office européen des brevets

(11) **EP 1 671 542 B1**

(12) **EUROPÄISCHE PATENTSCHRIFT**

(45) Veröffentlichungstag und Bekanntmachung des Hinweises auf die Patenterteilung:
**15.10.2008 Patentblatt 2008/42**

(21) Anmeldenummer: **06005869.0**

(22) Anmeldetag: **20.08.2001**

(51) Int Cl.:
***A01N 43/40*** *(2006.01)*     *A01N 43/80* *(2006.01)*

(54) **Synergistische Biozidzusammensetzung mit Pyrithion und Octylisothiazolinonen**

Synergistic biocidal compositions with pyrithione and octylisothiazolinones

Compositions biocides synergiques avec de la pyrithione et des octylisothiazolinones

(84) Benannte Vertragsstaaten:
**AT BE CH CY DE DK ES FI FR GB GR IE IT LI LU MC NL PT SE TR**

(30) Priorität: **21.08.2000 DE 10040814**

(43) Veröffentlichungstag der Anmeldung:
**21.06.2006 Patentblatt 2006/25**

(60) Teilanmeldung:
**08162324.1**

(62) Dokumentnummer(n) der früheren Anmeldung(en) nach Art. 76 EPÜ:
**01971931.9 / 1 313 368**

(73) Patentinhaber: **THOR GmbH**
**67346 Speyer (DE)**

(72) Erfinder:
• **Antoni-Zimmermann, Dagmar**
  **67346 Speyer (DE)**
• **Baum, Rüdiger**
  **68753 Waghäusel (DE)**
• **Wunder, Thomas**
  **67435 Neustadt/Weinstraße (DE)**
• **Schmidt, Hans-Jürgen**
  **67346 Speyer (DE)**

(74) Vertreter: **Hiltl, Elmar et al**
**Diehl & Partner**
**Augustenstrasse 46**
**80333 München (DE)**

(56) Entgegenhaltungen:
**EP-A- 0 492 811          WO-A-01/41570**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Biozidzusammensetzung als Zusatz zu Stoffen, die von schädlichen Mikroorganismen befallen werden können, mit einem Gehalt an einem Pyrithion als biozidem Wirkstoff. Insbesondere bezieht sich die Erfindung auf eine Biozidzusammensetzung, die als algizides und fungizides Mittel zum Konservieren von technischen Gegenständen und Materialien geeignet ist.

Biozide Zusammensetzungen werden in vielen Bereichen eingesetzt, beispielsweise zur Bekämpfung von schädlichen Algen, Pilzen und Bakterien. Zu den zahlreichen bioziden Wirkstoffen gehören z.B. auch Zink- und Natriumpyrithion, wie aus der US 5562995 und der US 5883154 ersichtlich ist. Die erste Druckschrift betrifft unter anderem das Vermeiden einer unerwünschten Verfärbung in einem wässrigen antimikrobiellen Gemisch, das sowohl Eisen- oder Kupferionen als auch Pyrithion als einen antimikrobiellen Wirkstoff enthält. Die Vermeidung einer Verfärbung erfolgt durch Zusatz von Zinkionen. Die zweite Druckschrift bezieht sich unter anderem auf das Verhindern oder Beseitigen einer unerwünschten Verfärbung eines antimikrobiellen Gemisches mit einem Gehalt an einem Harz, an Eisen- oder Kupferionen und an Pyrithion durch Zusatz von Zinkionen.

Ferner wurde über die biozide Wirkung von 2-n-Octylisothia-zolin-3-on berichtet, das gemäß der EP-0676140-A1 beispielsweise im Gemisch mit Methylisothiazolin-3-on eingesetzt wird.

Auch ist 4,5-Dichlor-2-n-octyl-4-isothiazolin-3-on als Fungizid im Handel erhältlich, beispielsweise unter der Bezeichnung "Rozone® 2000" von Rohm and Haas Company oder unter der Bezeichnung "ACTICIDE®" DT von Thor GmbH.

Aus der Japanischen Patentanmeldung 1992/353836 ist eine mikrobizide Zusammensetzung bekannt, die Zink-2-pyridinthiol-1-oxid, also Zinkpyrithion, und beispielsweise 3-Iod-2-propinylbutylcarbamat enthält.

Ferner ist in der Japanischen Patentanmeldung 1993/99195 ein Textilmaterial beschrieben, das mit einem Mittel zur Bekämpfung des Pilzwachstums auf den Textilfasern ausgerüstet ist. Dieses Mittel enthält den 3-Iod-2-propinylester der N-n-Butylcarbaminsäure, also 3-Iod-2-propinyl-N-butyl-carbamat, und beispielsweise Bis(2-pyridylthio-1-oxidono)-zink, also Zinkpyrithion.

Auch sind in der US 5464622 antimikrobielle Zusammensetzungen angegeben, die das Zinksalz des 2-Mercaptopyridin-N-oxids, also Zinkpyrithion, und Iodpropargylbutylcarbamat enthalten.

Weiterhin betrifft die WO 98/21962 algizide Zusammensetzungen, die ein Gemisch aus Zinkpyrithion und einer Halogenpropinylverbindung, z.B. 3-Iod-2-propinylbutylcarba-mat, enthält.

Aus der EP 0492811 A1 sind antimikrobielle Zusammensetzungen bekannt, die 4,5-Polymethylen-4-isothiazolin-3-on und ein Pyrithion enthalten. Zusätzlich können darin noch andere Isothiazolin-3-one in Form von 2-Methylisothiazolin-3-on, 5-Chlor-2-methylisothiazolin-3-on, Benzisothiazolin-3-on oder 2-Methylbenzisothiazolin-3-on vorliegen.

Im vorgenannten Stand der Technik gibt es keinen Hinweis auf Zusammensetzungen, die neben Zinkpyrithion noch ein Octylisothiazolin-3-on aufweisen.

Die bekannten Biozidzusammensetzungen, welche einen der vorgenannten bioziden Wirkstoffe enthalten, sind für bestimmte Anwendungszwecke noch nicht befriedigend. Dies gilt insbesondere bei ihrem Einsatz als Konservierungsmittel für die biozide Ausrüstung von Gegenständen oder Beschichtungen, deren Oberflächen erfahrungsgemäß häufig von Algen oder Pilzen befallen werden. Ein Algen- oder Pilzbefall macht Oberflächen nicht nur optisch unansehnlich, sondern kann auch zur Materialschädigung und zur Verkürzung der Gebrauchsdauer der entsprechenden Gegenstände und Oberflächen führen. Der mikrobielle Befall von Gegenständen oder von darauf aufgebrachten Beschichtungen tritt vor allem an Stellen mit hoher Feuchtigkeit auf, sowohl im Innenbereich, z.B. in Gebäuden der Lebensmittelindustrie, von Molkereien oder Brauereien, als auch im Außenbereich, vor allem an Gebäuden, die ungünstigen Witterungsbedingungen ausgesetzt sind, beispielsweise an Gebäudeseiten mit fehlender Sonneneinstrahlung. Insbesondere sind Beschichtungen, die einen der vorgenannten bioziden Wirkstoffe enthalten, gegen Besiedelung durch beispielsweise Alternaria-Arten oder andere Pilze aus der Gruppe der sogenannten "Schwärzepilze" zu wenig beständig. Einerseits führt der mikrobielle Bewuchs zu einer optischen Beeinträchtigung und einer damit einhergehenden Verfärbung. Andererseits neigen verschiedene biozide Wirkstoffe unter der Einwirkung von UV-Strahlung zu Verfärbungen.

Schließlich ist es erwünscht, mit den Wirkstoffen einerseits eine möglichst starke biozide Wirkung zu erzielen und andererseits dafür nur relativ kleine Mengen der Wirkstoffe einsetzen zu müssen.

Der Erfindung liegt daher die Aufgabe zugrunde, eine Biozidzusammensetzung anzugeben, die dadurch verbessert ist, dass ihre Komponenten in den vorgenannten technischen Materialien und Gegenständen, insbesondere in Beschichtungssystemen, wie Anstrichfarben, Lacken und Putzen, synergistisch zusammenwirken und deshalb in geringeren Konzentrationen als im Falle der Einzelkomponenten zum Schutz gegen Befall und Zerstörung durch Mikroorganismen verwendet werden können. Vorzugsweise soll die Biozidzusammensetzung gegen Bakterien, Pilze und Algen wirksam sein, insbesondere gegen Schimmelpilze, Hefen, holzzerstörende und holzverfärbende Pilze sowie Algen, ferner im Antifoulingbereich gegen relevante marine Organismen, wie Balus, Ascidia, Serpula, Mytilus, Spirorbis, Bugula und Hydrazoa. Dabei soll die Biozidzusammensetzung eine Wirksamkeit gegenüber Alternaria-Species und anderen Pilzen aus der Gruppe der sogenannten "Schwärzepilze" aufweisen und auch gegen eine Verfärbung durch Einwirkung von UV-Licht und Wärme möglichst stabil sein.

Diese Aufgabe löst die Erfindung durch eine Biozidzusammensetzung der eingangs genannten Art, die gemäß einer ersten Ausführungsform dadurch gekennzeichnet ist, dass sie als biozide Wirkstoffe nur (a) ein oder mehrere Pyrithione und (b) 2-n-Octylisothiazolin-3-on und/oder 4,5-Dichlor-2-n-octylisothiazolin-3-on enthält, ausgenommen eine Biozidzusammensetzung, die 24,5 Gew% einer 45-gewichtsprozentigen Lösung von 2-n-Octylisothiazolin-3-on in 1,2-Propylenglykol, 17,5 Gew% eines Gemisches aus 40 Gew% Natriumpyrithion und Rest Wasser sowie 58 Gew% Phenoxypropanol enthält. Gemäß einer zweiten Ausführungsform ist die Biozidzusammensetzung dadurch gekennzeichnet, dass sie als biozide Wirkstoffe nur (a) ein oder mehrere Pyrithione, (b) 2-n-Octylisothiazolin-3-on und/oder 4,5-Dichlor-2-n-octylisothiazolin-3-on sowie (c) ein oder mehrere Herbizide enthält.

Die erfindungsgemäße Biozidzusammensetzung ist insbesondere als algizides und fungizides Mittel zur Konservierung von mikrobiell anfälligen technischen Materialien geeignet. Solche Materialien, die durch diese Biozidzusammensetzung vor mikrobieller Veränderung oder Zerstörung geschützt werden sollen, sind z.B. Beschichtungssysteme, wie Farben, Lacke, Putze oder Antifoulinganstriche, sowie Kunststoffgegenstände, Kühlschmiermittel, Wärmeübertragungsflüssigkeiten, Klebestoffe, Leime, Papiere, Kartone, Leder, Textilien und Holz.

Beispiele für Mikroorganismen, die technische Materialien und Gegenstände der vorgenannten Art besiedeln, sind Vertreter der folgenden Gattungen:

Alternaria, wie Alternaria alternata,
Aspergillus, wie Aspergillus niger,
Aureobasidium, wie Aureobasidium pullulans,
Chaetomium, wie Chaetomium globosum,
Coniophora, wie Coniophora puteana,
Cladosporium, wie Cladosporium cladosporoides,
Candida, wie Candida albicans,
Lentinus, wie Lentinus tigrinus,
Penicillium, wie Penicillium funiculosum,
Rhodotorula, wie Rhodotorula rubra,
Sclerophoma, wie Sclerophoma pityophila,
Trichoderma, wie Trichoderma viride,
Ulocladium, wie Ulocladium atrum,
Escherichia, wie Escherichia coli,
Pseudomonas, wie Pseudomonas aeruginosa,
Staphylococcus, wie Staphylococcus aureus.

Die erfindungsgemäße Biozidzusammensetzung, die sich insbesondere als Konservierungsmittel für Beschichtungssysteme eignet, weist folgende positive Eigenschaften auf:

a) gute algizide Wirkung;

b) gute fungizide Wirkung;

c) gute Wirksamkeit gegen Alternaria-Spezies und andere vergleichsweise schwer zu inaktivierende Problemkeime auf dem Gebiet der Konservierung, insbesondere der Filmkonservierung und des Materialschutzes, zum Beispiel bei Beschichtungen in Form von Anstrichfarben, Antifoulingfarben, Lacken und Putzen, und für den Schutz von Holz, Leder und Kunststoffen;

d) gute Beständigkeit auch bei hoher Auswaschbelastung sowie Belastung durch UV-Licht, Wärme, extreme Wetter- und Klimabedingungen sowie Wetterwechselbedingungen;

e) biozide Langzeitwirkung trotz geringer Konzentration der eingesetzten Biozidzusammensetzung;

f) geringe Toxizität gegenüber Menschen und Säugetieren;

g) sehr niedriger Dampfdruck der bioziden Wirkstoffe;

h) günstiges Verhältnis von Preis und Leistung.

Die erfindungsgemäße Biozidzusammensetzung zeichnet sich dadurch aus, dass darin das Gemisch mit einerseits einem oder mehreren Pyrithionen und andererseits 2-n-Octyliso-thiazolin-3-on und/oder 4,5-Dichlor-2-n-octylisothiazolin-3-on zu einer synergistischen biziden Wirkung führt. Dies ermöglicht es beispielsweise, dass dann, wenn eine gute algizide Wirkung erwünscht ist, auf ein zusätzliches Algizid verzichtet werden kann.

Erfindungsgemäß liegt in der Biozidzusammensetzung das Pyrithion vorzugsweise in Form von Zink- oder Natriumpyrithion, insbesondere in Form von Zinkpyrithion, vor. Es können aber auch Kupfer- und Eisenpyrithion eingesetzt werden. Diese beiden letztgenannten Verbindungen weisen eine starke Eigenfärbung auf und eignen sich deshalb nur für spezielle Anwendungen, z.B. für eine Antifoulinganwendung.

Auch ist es günstig, wenn das Pyrithion in einer Konzentration von 0,1 bis 99,9 Gew.%, insbesondere von 0,5 bis 99,5 Gew.%, und das 2-n-Octylisothiazolin-3-on und/oder das 4,5-Dichlor-2-n-octylisothiazolin-3-on in einer Konzentration von 0,1 bis 99,9 Gew.%, jeweils bezogen auf die gesamte Biozidzusammensetzung, in der Zusammensetzung vorhanden sind.

Die erfindungsgemäße Biozidzusammensetzung enthält einerseits das Pyrithion und andererseits das 2-n-Octylisothia-zolin-3-on und/oder das 4,5-Dichlor-2-n-octylisothiazolin-3-on vorzugsweise im Gewichtsverhältnis von 1:1000 bis 1000:1, insbesondere von 1:99 bis 99:1, besonders bevorzugt von 1:10 bis 10:1, ganz besonders bevorzugt von 1:3 bis 3:1.

Es ist zweckmäßig, die biziden Wirkstoffe der erfindungsgemäßen Zusammensetzung in Kombination mit einem polaren oder unpolaren flüssigen Medium in den mikrobiell anfälligen Systemen einzusetzen. Dabei kann dieses Medium beispielsweise in der Biozidzusammensetzung und/oder in dem zu konservierenden System vorgegeben sein.

Bevorzugte polare flüssige Medien sind Alkohole, Ester, Glykole, Glykolether, Glykolester und 2,2,4-Trimethyl-1,3-pentandiolmonoisobutyrat (erhältlich unter der Handelsbezeichnung "Texanol" von Eastman Chemical Company).

Bevorzugte unpolare flüssige Medien sind Aromaten, wie Alkylbenzole, z.B. Xylol und Toluol, Paraffine, unpolare Ester, wie Phthalate und Fettsäureester, epoxidierte Fettsäuren und deren Derivate sowie Silikonöle.

Die erfindungsgemäße Biozidzusammensetzung weist vorzugsweise einen pH-Wert im Bereich von 4 bis 10, insbesondere im Bereich von 6 bis 8, auf.

Die vorgenannten biziden Wirkstoffe, nämlich das Pyrithion, das z.B. in Form von Zink-, Natrium-, Kupfer- und/oder Eisenpyrithion vorliegt, sowie das 2-n-Octyliso-thiazolin-3-on und/oder das 4,5-Dichlor-2-n-octylisothiazo-lin-3-on sind bekannte Stoffe und können nach Verfahren gemäß dem Stand der Technik hergestellt werden.

Entsprechend der vorgenannten zweiten Ausführungsform kann die erfindungsgemäße Biozidzusammensetzung zusätzlich einen oder mehrere andere bizide Wirkstoffe in Form von Herbiziden enthalten, die in Abhängigkeit vom speziellen zu konservierenden System ausgewählt werden. Beispiele für solche Herbizide sind nachfolgend angegeben:

Acetochlor, Acifluorfen, Aclonifen, Acrolein, Alachlor, Alloxydim, Ametryn, Amidosulfuron, Amitrol, Ammoniumsulfat, Anilofos, Asulam, Atrazin, Aziprotryn, Benazolin, Benfluralin, Benfuresat, Bensulfuron, Bensulid, Bentazon, Chloridazon, Chlorimuron, Chlormethoxyfen, Chlornitrofen, Chloressigsäure, Chlorpikrin, Chlortoluron, Chlorxuron, Chlorprepham, Chlorsulfuron, Chlorthal, Chlorthiamid, Cinmethylin, Cinofulfuron, Clethodim, Clomazon, Clomeprop, Clopyralid, Cyanamid, Cyanazin, Cycloat, Cycloxydim, Benzofencap, Benzthiazuron, Bifenox, Bilanafos, Borax, Bromacil, Brombutid, Bromfenoxim, Bromxynil, Butachlor, Butamifos, Butanachlor, Butralin, Butylat, Carbetamid, CGA 184927, Chloramben, Chlorbromuron, Chlorbufam, Chlorflurenol, Difenoxuron, Difenzoquat, Diflufenican, Dimefuron, Dimepiperat, Dimethachlor, Dimethametryn, Dimethipin, Dimethylarsinsäure, Dinitramin, Dinosebacetat, Dinoseb, Dinoterb, Diphenamid, Dipropetryn, Diquat, Dithiopyr, Diuron, DNOC, PPX-A788, 2,4-D, Daimuron, Dalapon, Dazomet, 2,4-DB, Desmedipham, Desmetryn, Dicamba, Dichlobenil, Dichlorprop, Dichlorprop-P, Diclofop, Diethatyl, Flamprop-M, Flazasulfuron, Fluazifop, Fluazifop-P, Fluchloralin, Flumeturon, Fluorglycofen, Fluornitrofen, Flupropanat, Flurenol, Fluridon, Flurochloridon, Fluroxypyr, Fomosafen, Fusamin, Furyloxyfen, Glufosinat, Glyphosat, Haloxyfop, Hexazinon, Imazamethabenz, Imazapyr, Imazaquin, Imazethapyr, Ioxynil, Isopropalin, Isoproturon, Isouron, Isoxaben, Isoxapyrifop, Lactofen, Lenacil, Linuron, LS830556, MCPA, Pebulat, Pendimethalin, Pentachlorphenol, Pentanochlor, Erdölfraktionen, Phenmedipham, Picloram, Piperophos, Pretilachlor, Primisulfuron, Prodiamin, Proglinazin, Prometon, Prometryn, Propachlor, Propanil, Propaquizafop, Propazin, Propham, Propyzamid, Prosulfocarb, Pyrazolynat, Pyrazosulfuron, Pyrazoxyfen, Pyributicarb, Pyridat, Quinclorac, Quinmerac, Quinoclamin, Quizalofop, Quizalofop-P, S-23121, DPX-E96361, DSMA, Eglinazin, Endothal, Epsorcarb, EPTC, Ethalfluralin, Ethidimuron, Ethofumesat, Fenoxaprop, Fenoxaprop-P, Fenuron, Flamprop, Irgarol 1051, MCPA-thioethyl, MCPB, Mecoprop, Mecoprop-P, Mefenacet, Mefluidid, Metam, Metamitron, Metazachlor, Methabenzthiazuron, Methazol, Methoprotryn, Methyldymron, Methylisothiocyanat, Metobromuron, Metolachlor, Metoxuron, Metribzin, Metsulfuron, Molinat, Monoalid, Monolinuron, MSMA, Naproanilid, Napropamid, Naptalam, Neburon, Nicosulfuron, Nipyraclofen, Norflurazon, Orbencarb, Oryzalin, Oxadiazon, Oxyfluorfen, Paraquat, Prometryn, Simetryn, SMY 1500, Natriumchlorat, Sulfometuron, Teeröle, TCA, Tebutam, Tebuthiuron, Terbacil, Terbumeton, Terbuthylazin, Terbutryn, Thiazafluron, Thifensulfuron, Thiobencarb, Thiocarbazil, Tioclorim, Tralkoxydim, Triallat, Triasulfuron, Tribenzuron, Triclopyr, Tridiphan, Trietazin, Trifluralin, UB1-C4874, Vernolat.

Die erfindungsgemäße Biozidzusammensetzung kann weitere übliche Bestandteile enthalten, die dem Fachmann auf dem Gebiet der Biozide als Zusatzstoffe bekannt sind. Es sind dies z.B. Verdickungsmittel, Entschäumer, Stoffe zur Einstellung des pH-Werts, Duftstoffe, Dispergierhilfsmittel und Stabilisatoren, wie Puffer, Zinksalze, Zinkoxid und Komplexbildner.

Bei der praktischen Anwendung kann die Biozidzusammensetzung entweder als fertiges Gemisch oder durch getrennte Zugabe der Biozide und der übrigen Komponenten der Zusammensetzung in das zu konservierende mikrobiell anfällige System eingebracht werden. Im Allgemeinen liegt die Gesamtkonzentration der Biozide in dem zu konservierenden mikrobiell anfälligen System, wenn es sich dabei z.B. um Farben, Putze, Kunststoffe und Leder handelt, bei 0,01 bis 10 %. Werden die Biozide als Antifoulingwirkstoffe benutzt, beträgt ihre Gesamtkonzentration in dem zu konservierenden System 0,1 bis 50 %. Im Fall des Einsatzes der Biozide für den Holzschutz werden sie normalerweise mit einer Gesamtkonzentration von 0,1 bis 20 % benutzt. Diese Konzentrationsangaben beziehen sich jeweils auf das gesamte Gemisch aus dem zu konservierenden System und der Biozidzusammensetzung.

Die Beispiele erläutern die Erfindung.

Beispiel 1

Mit diesem Beispiel wird der Synergismus von Kombinationen aus Zinkpyrithion (ZnPy) und 2-n-Octylisothiazolin-3-on (OIT) in der erfindungsgemäßen Biozidzusammensetzung aufgezeigt.

Dazu wurden wässrige Gemische mit unterschiedlichen Konzentrationen an ZnPy und OIT hergestellt, und es wurde die Wirkung dieser Gemische auf Penicillium funiculosum DSM 12637 geprüft.

Die wässrigen Gemische enthielten außer der Biozidkomponente und Wasser noch ein Nährmedium, nämlich eine Sabouraud-Maltose-Bouillon (Handelsprodukt Merck Nr. 10393). Die Zelldichte betrug $10^6$ Keime/ml. Die Inkubationszeit war 96 h bei 25 °C. Jede Probe wurde mit 120 U/min auf einem Inkubationsschüttler bebrütet.

In der nachfolgenden Tabelle I sind die verwendeten Konzentrationen von ZnPy und OIT angegeben. Ferner ist daraus ersichtlich, ob jeweils ein Wachstum des Mikroorganismus stattfand (Symbol "+") oder nicht (Symbol "-").

Die Tabelle I zeigt somit auch die minimalen Hemmkonzentrationen (MHK). Hiernach ergibt sich beim Einsatz von ZnPy allein ein MHK-Wert von 2 ppm und beim Einsatz von OIT allein ein MHK-Wert von 0,5 ppm. Dagegen sind die MHK-Werte der Gemische aus ZnPy und OIT deutlich niedriger, das heißt, diese Gemische wirken in ihrer Kombination synergistisch.

Tabelle I

MHK-Werte von ZnPy + OIT bezüglich Penicillium funiculosum DSM 12637 bei einer Inkubationszeit von 96 h/25 °C

| Konzentration ZnPy (ppm) | Konzentration OIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 5 | - | - | - | - | - | - | - | - | - | - |
| 3,0 | - | - | - | - | - | - | - | - | - | - |
| 2 | - | - | - | - | - | - | - | - | - | - |
| 1 | - | - | - | - | - | - | - | - | - | + |
| 0,75 | - | - | - | - | - | - | - | - | - | + |
| 0,5 | - | - | - | - | - | - | - | - | + | + |
| 0,4 | - | - | - | - | - | - | - | - | + | + |
| 0,3 | | - | - | - | - | - | - | + | + | + |
| 0,2 | - | - | - | - | - | - | + | + | + | + |
| 0,1 | - | - | - | - | - | + | + | + | + | + |
| 0 | - | - | - | - | - | + | + | + | + | + |

Der auftretende Synergismus wird mittels der in der Tabelle II berechneten Werte des Synergieindex zahlenmäßig dargestellt. Die Berechnung des Synergieindex nach der Methode von F. C. Kull et al., Applied Microbiology, Bd. 9 (1961), S. 538. Hier wird der Synergieindex mit der folgenden Formel berechnet:

$$\text{Synergieindex } SI = Q_a/Q_A + Q_b/Q_B.$$

Bei der Anwendung dieser Formel auf das hier geprüfte Biozidsystem haben die Größen in der Formel folgende Bedeutung:

$Q_a$ =     Konzentration von ZnPy im Biozidgemisch aus ZnPy und OIT

$Q_A$ =     Konzentration von ZnPy als einziges Biozid

$Q_b$ =     Konzentration von OIT im Biozidgemisch aus ZnPy und OIT

$Q_B$ =     Konzentration von OIT als einziges Biozid

Wenn der Synergieindex einen Wert von über 1 aufweist, bedeutet dies, dass ein Antagonismus vorliegt. Wenn der Synergieindex den Wert 1 annimmt, bedeutet dies, dass eine Addition der Wirkung der beiden Biozide gegeben ist. Wenn der Synergieindex einen Wert von unter 1 annimmt, bedeutet dies, dass ein Synergismus der beiden Biozide besteht.

Bei gleichzeitigem Einsatz von ZnPy und OIT trat ein Synergismus ein. Die Berechnung des Synergieindex ergibt sich aus der Tabelle II. Hiernach lag bei Penicillium funiculosum DSM 12637 der niedrigste Synergieindex (0,58) bei einem Gemisch aus 88,2 Gew.% ZnPy und 11,8 Gew.% OIT.

Tabelle II

Berechnung des Synergieindex von ZnPy + OIT bezüglich Penicillium funiculosum DSM 12637 bei einer Inkubationszeit von 96 h/25 °C

| MHK bei | | | Konzentration | | $Q_a/Q_A$ | $Q_b/Q_B$ | Synergie-index |
|---|---|---|---|---|---|---|---|
| ZnPy-Konzentration $Q_a$ (ppm) | OIT-Konzentration $Q_b$ ppm) | Gesamtkonzentration ZnPy + OIT $Q_a + Q_b$ (ppm) | ZnPy (Gew-%) | OIT (Gew.%) | | | $Q_a/Q_A + Q_b/Q_B$ |
| 0 | 0,5 | 0,5 | 0,0 | 100,0 | 0,00 | 1,00 | 1,00 |
| 0,2 | 0,4 | 0,6 | 33,3 | 66,7 | 0,10 | 0,80 | 0,90 |
| 0,3 | 0,3 | 0,6 | 50,0 | 50,0 | 0,15 | 0,60 | 0,75 |
| 0,4 | 0,2 | 0,6 | 66,7 | 33,3 | 0,20 | 0,40 | 0,60 |
| 0,5 | 0,2 | 0,7 | 71,4 | 28,6 | 0,25 | 0,40 | 0,65 |
| 0,75 | 0,1 | 0,85 | 88,2 | 11,8 | 0,38 | 0,20 | 0,58 |
| 1 | 0,1 | 1,1 | 90,9 | 9,1 | 0,50 | 0,20 | 0,70 |
| 2 | 0 | 2 | 100,0 | 0,0 | 1,00 | 0,00 | 1,00 |

Beispiel 2

Ähnlich wie im Beispiel 1 wurde der Synergismus von ZnPy und OIT gegenüber dem Mikroorganismus Penicillium funiculosum IMI 211742 aufgezeigt.

Die Versuchsansätze enthielten wieder eine Sabouraud-Maltose-Bouillon als Nährmedium. Die Zelldichte betrug $10^6$ Keime/ml. Die Inkubationszeit war 72 h bei 25 °C. Jede Probe wurde mit 120 U/min auf einem Inkubationsschüttler bebrütet.

Aus der nachfolgenden Tabelle III sind die MHK-Werte der geprüften Biozidzusammensetzung ersichtlich. Der MHK-Wert beim Einsatz von ZnPy allein betrug 1 ppm und beim Einsatz von OIT allein 0,75 ppm.

Tabelle III

MHK-Werte von ZnPy + OIT bezüglich Penicillium funiculosum IMI 211742 bei einer Inkubationszeit von 72 h/25 °C

| Konzentration ZnPy (ppm) | Konzentration OIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 5 | - | - | - | - | - | - | - | - | - | - |
| 3,0 | - | - | - | - | - | - | - | - | - | - |
| 2 | - | - | - | - | - | - | - | - | - | - |
| 1 | - | - | - | - | - | - | - | - | - | - |
| 0,75 | - | - | - | - | - | - | - | - | - | + |
| 0,5 | - | - | - | - | - | - | - | - | - | + |

(fortgesetzt)

MHK-Werte von ZnPy + OIT bezüglich Penicillium funiculosum IMI 211742 bei einer Inkubationszeit von 72 h/25 °C

| Konzentration ZnPy (ppm) | Konzentration OIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 0,4 | - | - | - | - | - | - | - | + | + | + |
| 0,3 | - | - | - | - | - | - | + | + | + | + |
| 0,2 | - | - | - | - | + | + | + | + | + | + |
| 0,1 | - | - | - | - | + | + | + | + | + | + |
| 0 | - | - | - | - | + | + | + | + | + | + |

Bei gleichzeitigem Einsatz von ZnPy und OIT trat ein Synergismus ein. Die Berechnung des Synergieindex ergibt sich aus der Tabelle IV. Hiernach lag bei Penicillium funiculosum IMI 211742 der niedrigste Synergieindex (0,63) bei einem Gemisch aus 83,3 Gew.% ZnPy und 16,7 Gew.% OIT.

Tabelle IV

Berechnung des Synergieindex von ZnPy + OIT bezüglich Penicillium funiculosum IMI 211742 bei einer Inkubationszeit von 72 h/25 °C

| MHK bei | | | Konzentration | | $Q_a/Q_A$ | $Q_b/Q_B$ | Synergie-index |
|---|---|---|---|---|---|---|---|
| ZnPy-Konzentration $Q_a$ (ppm) | OIT-Konzentration $Q_b$ ppm) | Gesamtkonzentration ZnPy + OIT $Q_a + Q_b$ (ppm) | ZnPy (Gew-%) | OIT (Gew. %) | | | $Q_a/Q_A + Q_b/Q_B$ |
| 0 | 0,75 | 0,75 | 0,0 | 100,0 | 0,00 | 1,00 | 1,00 |
| 0,3 | 0,5 | 0,8 | 37,5 | 62,5 | 0,30 | 0,67 | 0,97 |
| 0,3 | 0,4 | 0,7 | 42,9 | 57,1 | 0,30 | 0,53 | 0,83 |
| 0,4 | 0,3 | 0,7 | 57,1 | 42,9 | 0,40 | 0,40 | 0,80 |
| 0,5 | 0,2 | 0,7 | 71,4 | 28,6 | 0,50 | 0,27 | 0,77 |
| 0,5 | 0,1 | 0,6 | 83,3 | 16,7 | 0,50 | 0,13 | 0,63 |
| 0,75 | 0,1 | 0,85 | 88,2 | 11,8 | 0,75 | 0,13 | 0,88 |
| 1 | 0 | 1 | 100,0 | 0,0 | 1,00 | 0,00 | 1,00 |

Beispiel 3

Ähnlich wie im Beispiel 1 wurde der Synergismus von ZnPy und DCOIT gegenüber dem Mikroorganismus Penicillium funiculosum DSM 12637 aufgezeigt.

Die Versuchsansätze enthielten wieder eine Sabouraud-Maltose-Bouillon als Nährmedium. Die Zelldichte betrug $10^6$ Keime/ml. Die Inkubationszeit war 96 h bei 25 °C. Jede Probe wurde mit 120 U/min auf einem Inkubationsschüttler bebrütet.

Aus der nachfolgenden Tabelle V sind die MHK-Werte der geprüften Biozidzusammensetzung ersichtlich. Der MHK-Wert beim Einsatz von ZnPy allein betrug 2 ppm und beim Einsatz von DCOIT allein 2 ppm.

Tabelle V

MHK-Werte von ZnPy + DCOIT bezüglich Penicillium funiculosum DSM 12637 bei einer Inkubationszeit von 96 h/25 °C

| Konzentration ZnPy (ppm) | Konzentration DCOIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 5 | - | - | - | - | - | - | - | - | - | - |
| 3,0 | - | - | - | - | - | - | - | - | - | - |
| 2 | - | - | - | - | - | - | - | - | - | - |
| 1 | - | - | - | - | - | - | - | - | - | + |
| 0,75 | - | - | - | - | - | - | - | - | - | + |
| 0,5 | - | - | - | - | - | - | - | - | + | + |
| 0,4 | - | - | - | - | - | - | - | + | + | + |

(fortgesetzt)

MHK-Werte von ZnPy + DCOIT bezüglich Penicillium funiculosum DSM 12637 bei einer Inkubationszeit von 96 h/25 °C

| Konzentration ZnPy (ppm) | Konzentration DCOIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 0,3 | - | - | - | - | - | + | + | + | + | + |
| 0,2 | - | - | - | + | + | + | + | + | + | + |
| 0,1 | - | - | + | + | + | + | + | + | + | + |
| 0 | - | - | + | + | + | + | + | + | + | + |

Bei gleichzeitigem Einsatz von ZnPy und DCOIT trat ein Synergismus ein. Die Berechnung des Synergieindex ergibt sich aus der Tabelle VI. Hiernach lag bei Penicillium funiculosum DSM 12637 der niedrigste Synergieindex (0,35) bei einem Gemisch aus 57,1 bis 71,4 Gew.% ZnPy und 42,9 bis 28,6 Gew.% DCOIT.

Tabelle VI

Berechnung des Synergieindex von ZnPy + DCOIT bezüglich Penicillium funiculosum DSM 12637 bei einer Inkubationszeit von 96 h/25 °C

| MHK bei | | Konzentration | | | $Q_a/Q_A$ | $Q_b/Q_B$ | Synergie-index |
|---|---|---|---|---|---|---|---|
| ZnPy-Konzentration $Q_a$ (ppm) | DCOIT-Konzentration $Q_b$ ppm) | Gesamtkonzentration ZnPy + DCOIT $Q_a + Q_b$ (ppm) | ZnPy (Gew-%) | DCOIT (Gew.%) | | | $Q_a/Q_A+ Q_b/Q_B$ |
| 0 | 2 | 2 | 0,0 | 100,0 | 0,00 | 1,00 | 1,00 |
| 0,2 | 1 | 1,2 | 16,7 | 83,3 | 0,10 | 0,50 | 0,60 |
| 0,3 | 0,75 | 1,05 | 28,6 | 71,4 | 0,15 | 0,38 | 0,53 |
| 0,3 | 0,5 | 0,8 | 37,5 | 62,5 | 0,15 | 0,25 | 0,40 |
| 0,4 | 0,4 | 0,8 | 50,0 | 50,0 | 0,20 | 0,20 | 0,40 |
| 0,4 | 0,3 | 0,7 | 57,1 | 42,9 | 0,20 | 0,15 | 0,35 |
| 0,5 | 0,2 | 0,7 | 71,4 | 28,6 | 0,25 | 0,10 | 0,35 |
| 0,75 | 0,1 | 0,85 | 88,2 | 11,8 | 0,38 | 0,05 | 0,43 |
| 1 | 0,1 | 1,1 | 90,9 | 9,1 | 0,50 | 0,05 | 0,55 |
| 2 | 0 | 2 | 100,0 | 0,0 | 1,00 | 0,00 | 1,00 |

Beispiel 4

Ähnlich wie im Beispiel 1 wurde der Synergismus von ZnPy und DCOIT gegenüber dem Mikroorganismus Penicillium funiculosum IMI 211742 aufgezeigt.

Die Versuchsansätze enthielten wieder eine Sabouraud-Maltose-Bouillon als Nährmedium. Die Zelldichte betrug $10^6$ Keime/ml. Die Inkubationszeit war 72 h bei 25 °C. Jede Probe wurde mit 120 U/min auf einem Inkubationsschüttler bebrütet.

Aus der nachfolgenden Tabelle VII sind die MHK-Werte der geprüften Biozidzusammensetzung ersichtlich. Der MHK-Wert beim Einsatz von ZnPy allein betrug 0,75 ppm und beim Einsatz von DCOIT allein 1 ppm.

Tabelle VII

MHK-Werte von ZnPy + DCOIT bezüglich Penicillium funiculosum IMI 211742 bei einer Inkubationszeit von 72 h/25 °C

| Konzentration ZnPy (ppm) | Konzentration DCOIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 5 | - | - | - | - | - | - | - | - | - | - |
| 3,0 | - | - | - | - | - | - | - | - | - | - |
| 2 | - | - | - | - | - | - | - | - | - | - |
| 1 | - | - | - | - | - | - | - | - | - | - |
| 0,75 | - | - | - | - | - | - | - | - | - | - |

(fortgesetzt)

MHK-Werte von ZnPy + DCOIT bezüglich Penicillium funiculosum IMI 211742 bei einer Inkubationszeit von 72 h/25 °C

| Konzentration ZnPy (ppm) | Konzentration DCOIT (ppm) | | | | | | | | | |
|---|---|---|---|---|---|---|---|---|---|---|
| | 3 | 2 | 1 | 0,75 | 0,5 | 0,4 | 0,3 | 0,2 | 0,1 | 0 |
| 0,5 | - | - | - | - | - | - | - | - | + | + |
| 0,4 | - | - | - | - | - | - | - | - | + | + |
| 0,3 | - | - | - | - | - | - | + | + | + | + |
| 0,2 | - | - | - | - | - | + | + | + | + | + |
| 0,1 | - | - | - | - | + | + | + | + | + | + |
| 0 | - | - | - | + | + | + | + | + | + | + |

Bei gleichzeitigem Einsatz von ZnPy und DCOIT trat ein Synergismus ein. Die Berechnung des Synergieindex ergibt sich aus der Tabelle VIII. Hiernach lag bei Penicillium funiculosum IMI 211742 der niedrigste Synergieindex (0,73) bei einem Gemisch aus 66,7 Gew.% ZnPy und 33,3 Gew.% DCOIT.

Tabelle VIII

Berechnung des Synergieindex von ZnPy + DCOIT bezüglich Penicillium funiculosum IMI 211742 bei einer Inkubationszeit von 72 h/25 °C

| MHK bei | | Konzentration | | | $Q_a/Q_A$ | $Q_b/Q_B$ | Synergie-index |
|---|---|---|---|---|---|---|---|
| ZnPy-Konzentration $Q_a$(ppm) | DCOIT-Konzentration $Q_b$ppm) | Gesamtkonzentration ZnPy + DCOIT $Q_a + Q_b$(ppm) | ZnPy (Gew-%) | DCOIT (Gew-%) | | | $Q_a/Q_A$ + $Q_b/Q_B$ |
| 0 | 1 | 1 | 0,0 | 100,0 | 0,00 | 1,00 | 1,00 |
| 0,1 | 0,75 | 0,85 | 11,8 | 88,2 | 0,13 | 0,75 | 0,88 |
| 0,2 | 0,5 | 0,7 | 28,6 | 71,4 | 0,27 | 0,50 | 0,77 |
| 0,3 | 0,4 | 0,7 | 42,9 | 57,1 | 0,40 | 0,40 | 0,80 |
| 0,4 | 0,3 | 0,7 | 57,1 | 42,9 | 0,53 | 0,30 | 0,83 |
| 0,4 | 0,2 | 0,6 | 66,7 | 33,3 | 0,53 | 0,20 | 0,73 |
| 0,5 | 0,2 | 0,7 | 71,4 | 28,6 | 0,67 | 0,20 | 0,87 |
| 0,75 | 0 | 0,75 | 100,0 | 0,0 | 1,00 | 0,00 | 1,00 |

Beispiel 5

Ähnlich wie im Beispiel 1 wurde der Synergismus von ZnPy und DCOIT gegenüber dem Mikroorganismus Aspergillus niger DSM 1957 aufgezeigt.

Die Versuchsansätze enthielten wieder eine Sabouraud-Maltose-Bouillon als Nährmedium. Die Zelldichte betrug $10^6$ Keime/ml. Die Inkubationszeit war 72 h bei 25 °C. Jede Probe wurde mit 120 U/min auf einem Inkubationsschüttler bebrütet.

Aus der nachfolgenden Tabelle IX sind die MHK-Werte der geprüften Biozidzusammensetzungen ersichtlich. Der MHK-Wert beim Einsatz von ZnPy allein betrug 17,5 ppm und beim Einsatz von DCOIT allein 0,75 ppm.

Tabelle IX

MHK-Werte von ZnPy + DCOIT bezüglich Aspergillus niger DSM 1957 bei einer Inkubationszeit von 72 h/25 °C

| Konzentration ZnPy (ppm) | Konzentration DCOIT (ppm) | | | | | | | | | | | |
|---|---|---|---|---|---|---|---|---|---|---|---|---|
| | 5 | 4 | 3 | 2 | 1 | 0,75 | 0,5 | 0,4 | 0,3 | 0,2 | 0,1 | 0 |
| 20 | - | - | - | - | - | - | - | - | - | - | - | - |
| 17,5 | - | - | - | - | - | - | - | - | - | - | - | - |
| 15,0 | - | - | - | - | - | - | - | - | - | + | + | + |
| 12,5 | - | - | - | - | - | - | - | - | - | + | + | + |
| 10 | - | - | - | - | - | - | - | - | - | + | + | + |

(fortgesetzt)

MHK-Werte von ZnPy + DCOIT bezüglich Aspergillus niger DSM 1957 bei einer Inkubationszeit von 72 h/25 °C

| Konzentration ZnPy (ppm) | Konzentration DCOIT (ppm) | | | | | | | | | | | |
|---|---|---|---|---|---|---|---|---|---|---|---|---|
| | 5 | 4 | 3 | 2 | 1 | 0,75 | 0,5 | 0,4 | 0,3 | 0,2 | 0,1 | 0 |
| 7,5 | - | - | - | - | - | - | - | - | - | + | + | + |
| 5 | - | - | - | - | - | - | - | - | - | + | + | + |
| 4 | - | - | - | - | - | - | - | + | + | + | + | + |
| 3 | - | - | - | - | - | - | - | + | + | + | + | + |
| 2 | - | - | - | - | - | - | - | + | + | + | + | + |
| 1 | - | - | - | - | - | - | - | + | + | + | + | + |
| 0 | - | - | - | - | - | - | + | + | + | + | + | + |

Bei gleichzeitigem Einsatz von ZnPy und DCOIT trat ein Synergismus ein. Die Berechnung des Synergieindex ergibt sich aus der Tabelle X. Hiernach lag bei Aspergillus niger DSM 1957 der niedrigste Synergieindex (0,69) bei einem Gemisch aus 94,3 Gew.% ZnPy und 5,7 Gew.% DCOIT.

<u>Tabelle X</u>

Berechnung des Synergieindex von ZnPy + DCOIT bezüglich Aspergillus niger DSM 1957 bei einer Inkubationszeit von 72 h/25 °C

| MHK bei | | | Konzentration | | $Q_a/Q_A$ | $Q_b/Q_B$ | Synergie-index |
|---|---|---|---|---|---|---|---|
| ZnPy-Konzentration | DCOIT-Konzentration | Gesamtkonzentration | ZnPy | DCOIT | | | |
| | | ZnPy + DCOIT | | | | | $Q_a/Q_A +$ $Q_b/Q_B$ |
| $Q_a$ (ppm) | $Q_b$ ppm) | $Q_a + Q_b$ (ppm) | (Gew-%) | (Gew.%) | | | |
| 0 | 0,75 | 0,75 | 0,0 | 100,0 | 0,00 | 1,00 | 1,00 |
| 1 | 0,5 | 1,5 | 66,7 | 33,3 | 0,06 | 0,67 | 0,72 |
| 2 | 0,5 | 2,5 | 80,0 | 20,0 | 0,11 | 0,67 | 0,78 |
| 3 | 0,5 | 3,5 | 85,7 | 14,3 | 0,17 | 0,67 | 0,84 |
| 4 | 0,5 | 4,5 | 88,9 | 11,1 | 0,23 | 0,67 | 0,90 |
| 5 | 0,4 | 5,4 | 92,6 | 7,4 | 0,29 | 0,53 | 0,82 |
| 5 | 0,3 | 5,3 | 94,3 | 5,7 | 0,29 | 0,40 | 0,69 |
| 7,5 | 0,3 | 7,8 | 96,2 | 3,8 | 0,43 | 0,40 | 0,83 |
| 10 | 0,3 | 10,3 | 97,1 | 2,9 | 0,57 | 0,40 | 0,97 |
| 17,5 | 0 | 17,5 | 100,0 | 0,0 | 1,00 | 0,00 | 1,00 |

**Patentansprüche**

1. Biozidzusammensetzung als Zusatz zu Stoffen, die von schädlichen Mikroorganismen befallen werden können, **dadurch gekennzeichnet, dass** sie als biozide Wirkstoffe nur (a) ein oder mehrere Pyrithione und (b) 2-n-Octylisothiazolin-3-on und/oder 4,5-Dichlor-2-n-octylisothiazolin-3-on enthält, ausgenommen eine Biozidzusammensetzung, die 24,5 Gew% einer 45-gewichtsprozentigen Lösung von 2-n-Octylisothiazolin-3-on in 1,2-Propylenglykol, 17,5 Gew% eines Gemisches aus 40 Gew% Natriumpyrithion und Rest Wasser sowie 58 Gew% Phenoxypropanol enthält.

2. Biozidzusammensetzung nach Anspruch 1, **dadurch gekennzeichnet, dass** sie als Komponente (a) Zink-, Natrium-, Kupfer- und/oder Eisenpyrithion enthält.

3. Biozidzusammensetzung nach Anspruch 2, **dadurch gekennzeichnet, dass** sie als Komponente (a) nur Zinkpyrithion enthält.

4. Biozidzusammensetzung nach einem der Ansprüche 1 bis 3, **dadurch gekennzeichnet, dass** sie als Komponente (b) nur 2-n-Octylisothiazolin-3-on enthält.

**5.** Biozidzusammensetzung nach einem der Ansprüche 1 bis 3, **dadurch gekennzeichnet, dass** sie als Komponente (b) nur 4,5-Dichlor-2-n-octylisothiazolin-3-on enthält.

**6.** Biozidzusammensetzung nach einem der Ansprüche 1 bis 3, **dadurch gekennzeichnet, dass** sie als Komponente (b) ein Gemisch aus 2-n-Octylisothiazolin-3-on und 4,5-Dichlor-2-n-octylisothiazolin-3-on enthält.

**7.** Biozidzusammensetzung als Zusatz zu Stoffen, die von schädlichen Mikroorganismen befallen werden können, **dadurch gekennzeichnet, dass** sie als biozide Wirkstoffe nur (a) ein oder mehrere Pyrithione, (b) 2-n-Octylisothiazolin-3-on und/oder 4,5-Dichlor-2-n-octylisothiazolin-3-on sowie (c) ein oder mehrere Herbizide enthält.

**8.** Biozidzusammensetzung nach Anspruch 7, **dadurch gekennzeichnet, dass** sie als Komponente (a) Zink-, Natrium-, Kupfer- und/oder Eisenpyrithion enthält.

**9.** Biozidzusammensetzung nach Anspruch 7, **dadurch gekennzeichnet, dass** sie als Komponente (a) nur Zinkpyrithion enthält.

**10.** Biozidzusammensetzung nach einem der Ansprüche 1 bis 9, **dadurch gekennzeichnet, dass** sie das Pyrithion in einer Konzentration von 0,5 bis 99,5 Gew.%, bezogen auf die gesamte Biozidzusammensetzung, enthält.

**11.** Biozidzusammensetzung nach einem der Ansprüche 1 bis 10, **dadurch gekennzeichnet, dass** sie das 2-n-Octylisothiazolin-3-on und/oder das 4,5-Dichlor-2-n-octylisothiazolin-3-on in einer Konzentration von 0,1 bis 99,9 Gew. %, bezogen auf die gesamte Biozidzusammensetzung, enthält.

**12.** Biozidzusammensetzung nach einem der Ansprüche 1 bis 11, **dadurch gekennzeichnet, dass** sie das Pyrithion einerseits und das 2-n-Octylisothiazolin-3-on und/oder das 4,5-Dichlor-2-n-octylisothiazolin-3-on andererseits in einem Gewichtsverhältnis von 1:1000 bis 1000:1 enthält.

**13.** Biozidzusammensetzung nach Anspruch 12, **dadurch gekennzeichnet, dass** das Gewichtsverhältnis 1:10 bis 10:1 beträgt.

**14.** Biozidzusammensetzung nach einem der Ansprüche 1 bis 13, **dadurch gekennzeichnet, dass** sie das Pyrithion und das 2-n-Octylisothiazolin-3-on und/oder das 4,5-Dichlor-2-n-octylisothiazolin-3-on in einer Gesamtkonzentration von 0,2 bis 100 Gew.%, bezogen auf die gesamte Biozidzusammensetzung, enthält.

**15.** Biozidzusammensetzung nach einem der Ansprüche 1 bis 14, **dadurch gekennzeichnet, dass** sie übliche Zusatzstoffe in Form von Verdickungsmitteln, Entschäumern, Stoffen zur Einstellung des pH-Werts, Duftstoffen, Dispergierhilfsmitteln und/oder Stabilisatoren enthält.

**16.** Verwendung einer Biozidzusammensetzung nach einem der Ansprüche 1 bis 15 zur Bekämpfung von schädlichen Mikroorganismen bei technischen Gegenständen und Materialien.

**17.** Verwendung nach Anspruch 16, **dadurch gekennzeichnet, dass** die Biozidzusammensetzung zum Konservieren von Beschichtungen, Leder, Kunststoffen oder Holz eingesetzt wird.

**18.** Gegen schädliche Mikroorganismen konserviertes Stoffgemisch oder Material, **gekennzeichnet durch** einen Gehalt an einer Biozidzusammensetzung nach einem der Ansprüche 1 bis 15.

**Claims**

**1.** Biocidal composition as an additive for materials which can be attacked by damaging microorganisms, **characterised in that** it contains as biocidal active material only (a) one or more pyrithiones and (b) 2-n-octylisothiazolin-3-one and/or 4,5-dichloro-2-n-octylisothiazolin-3-one, with the exception of a biocidal composition which contains 24.5 wt% of a 45 weight percent solution of 2-n-octylisothiazolin-3-one in 1,2-propylene glycol, 17.5 wt% of a mixture of 40 wit% sodium pyrithione and the balance water as well as 58 wt% phenoxypropanol.

**2.** Biocidal composition according to Claim 1, **characterised in that** it contains as component (a) zinc, sodium, copper and/or iron pyrithione.

**3.** Biocidal composition according to Claim 2, **characterised in that** it contains as component (a) only zinc pyrithione.

**4.** Biocidal composition according to one of Claims 1 to 3, **characterised in that** it contains as component (b) only 2-n-octylisothiazolin-3-one.

**5.** Biocidal composition according to one of Claims 1 to 3, **characterised in that** it contains as component (b) only 4,5-dichloro-2-n-octylisothazolin-3-one.

**6.** Biocidal composition according to one of Claims 1 to 3, **characterised in that** it contains as component (b) a mixture of 2-n-octylisothiazolin-3-one and 4,5-dichloro-2-n-octylisothiazolin-3-one.

**7.** Biocidal composition as an additive to materials which can be attacked by damaging microorganisms, **characterised in that** it contains as biocidal active material only (a) one or more pyrithiones, (b) 2-n-octylisothiazolin-3-one and/or 4,5-dichloro-2-n-octylisothiazolin-3-one as well as (c) one or more herbicides.

**8.** Biocidal composition according to Claim 7, **characterised in that** it contains as component (a) zinc, sodium, copper and/or iron pyrithione.

**9.** Biocidal composition according to Claim 7, **characterised in that** it contains as component (a) only zinc pyrithione.

**10.** Biocidal composition according to one of Claims 1 to 9, **characterised in that** it contains the pyrithione at a concentration of 0.5 to 99.5 wt% taken on the entire biocidal composition.

**11.** Biocidal composition according to one of Claims 1 to 10, **characterised in that** it contains the 2-n-octylisothiazolin-3-one and/or the 4,5-dichloro-2-n-octylisothiazolin-3-one at a concentration of from 0.1 to 99.9 wt% taken on the entire biocidal composition.

**12.** Biocidal composition according to one of Claims 1 to 11, **characterised in that** it contains the pyrithione on the one hand and the 2-n-octylisothiazolin-3-one and/or the 4,5-dichloro-2-n-octylisothiazolin-3-one on the other in a weight ratio of from 1:1000 to 1000:1.

**13.** Biocidal composition according to Claim 12, **characterised in that** the weight ratio amounts to 1:10 to 10:1.

**14.** Biocidal composition according to one of Claims 1 to 13, **characterised in that** it contains the pyrithione and the 2-n-octylisothiazolin-3-one and/or the 4,5-dichloro-2-n-octylisothiazolin-3-one at a total concentration of from 0.2 to 100 wt%, taken on the entire biocidal composition.

**15.** Biocidal composition according to one of Claims 1 to 14, **characterised in that** it contains customary additives in the form of thickening agents, defoamers, materials for adjusting the pH value, odorants, dispersion assistants and/or stabilisers.

**16.** Use of a biocidal composition according to one of Claims 1 to 15 for combating damaging microorganisms in technical objects and materials.

**17.** Use according to Claim 16 **characterised in that** the biocidal composition is used for preserving coatings, leather, plastics or wood.

**18.** A mixture of substances or material preserved against damaging microorganisms **characterised by** a content of a biocidal composition according to one of Claims 1 to 15.

**Revendications**

**1.** Composition biocide en tant qu'additif dans des substances qui peuvent être attaquées par des micro-organismes nuisibles, **caractérisée en ce qu'**elle contient, comme agents biocides, uniquement (a) une ou plusieurs pyrithiones et (b) de la 2-n-octylisothiazoline-3-one et/ou 4,5-dichloro-2-n-octylisothiazoline-3-one, excepté une composition biocide, qui contient 24,5 % en poids d'une solution à 45 % en poids de 2-n-octylisothiazoline-3-one dans du 1,2-propylèneglycol, 17,5 % en poids d'un mélange composé de 40 % en poids de pyrithione de sodium et le reste en eau ainsi que 58 % en poids de phénoxypropanol.

2. Composition biocide selon la revendication 1, **caractérisée en ce qu'**elle contient, comme composant (a), de la pyrithione de zinc, de sodium, de cuivre et/ ou de fer.

3. Composition biocide selon la revendication 2, **caractérisée en ce qu'**elle contient, comme composant (a), uniquement de la pyrithione de zinc.

4. Composition biocide selon l'une des revendications 1 à 3, **caractérisée en ce qu'**elle contient, comme composant (b), uniquement de la 2-n-octylisothiazoline-3-one.

5. Composition biocide selon l'une des revendications 1 à 3, **caractérisée en ce qu'**elle contient, comme composant (b), uniquement de la 4,5-dichloro-2-n-octylisothiazoline-3-one.

6. Composition biocide selon l'une des revendications 1 à 3, **caractérisée en ce qu'**elle contient, comme composant (b), un mélange composé de 2-n-octylisothiazoline-3-one et de 4,5-dichloro-2-n-octylisothiazoline-3-one.

7. Composition biocide en tant qu'additif dans des substances qui peuvent être attaquées par des micro-organismes nuisibles, **caractérisée en ce qu'**elle contient, comme agents biocides, uniquement (a) une ou plusieurs pyrithiones et (b) de la 2-n-octylisothiazoline-3-one et/ ou 4,5-dichloro-2-n-octylisothiazoline-3-one, ainsi que (c) un ou plusieurs herbicides.

8. Composition biocide selon la revendication 7, **caractérisée en ce qu'**elle contient, comme composant (a), de la pyrithione de zinc, de sodium, de cuivre et/ ou de fer.

9. Composition biocide selon la revendication 7, **caractérisée en ce qu'**elle contient, comme composant (a), uniquement de la pyrithione de zinc.

10. Composition biocide selon l'une des revendications 1 à 9, **caractérisée en ce qu'**elle contient la pyrithione dans une concentration allant de 0,5 à 99,5 % en poids, par rapport à la composition biocide totale.

11. Composition biocide selon l'une des revendications 1 à 10, **caractérisée en ce qu'**elle contient la 2-n-octylisothiazoline-3-one et/ou la 4,5-dichloro-2-n-octylisothiazoline-3-one dans une concentration allant de 0,1 à 99,9 % en poids, par rapport à la composition biocide totale.

12. Composition biocide selon l'une des revendications 1 à 11, **caractérisée en ce qu'**elle contient la pyrithione d'une part et la 2-n-octylisothiazoline-3-one et/ou la 4,5-dichloro-2-n-octylisothiazoline-3-one d'autre part dans un rapport en poids allant de 1:1000 à 1000:1.

13. Composition biocide selon la revendication 12, **caractérisée en ce que** le rapport en poids va de 1:10 à 10:1.

14. Composition biocide selon l'une des revendications 1 à 13, **caractérisée en ce qu'**elle contient la pyrithione et la 2-n-octylisothiazoline-3-one et/ ou la 4,5-dichloro-2-n-octylisothiazoline-3-one dans une concentration totale allant de 0,2 à 100 % en poids, par rapport à la composition biocide totale.

15. Composition biocide selon l'une des revendications 1 à 14, **caractérisée en ce qu'**elle contient des additifs traditionnels sous la forme d'épaississants, d'agents anti-mousse, de substances pour ajuster le pH, de substances odorantes, de dispersants et/ ou de stabilisants.

16. Utilisation d'une composition biocide selon l'une des revendications 1 à 15 pour lutter contre des micro-organismes nuisibles sur des objets et des matériaux techniques.

17. Utilisation selon la revendication 16, **caractérisée en ce que** la composition biocide est utilisée pour protéger des revêtements, des cuirs, des matières plastiques ou du bois.

18. Matériau ou mélange de matériaux protégé contre des micro-organismes nuisibles, **caractérisé par** une teneur en composition biocide selon l'une des revendications 1 à 15.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5562995 A
- US 5883154 A
- EP 0676140 A1
- JP 4353836 A
- JP 5099195 A
- US 5464622 A
- WO 9821962 A
- EP 0492811 A1

**In der Beschreibung aufgeführte Nicht-Patentliteratur**

- **VON F. C. KULL et al.** Applied Microbiology. 1961, vol. 9, 538